(19) Europäisches Patentamt / European Patent Office / Office européen des brevets

(11) **EP 3 993 101 A1**

(12) **EUROPEAN PATENT APPLICATION**

(43) Date of publication:
**04.05.2022 Bulletin 2022/18**

(21) Application number: **21205125.4**

(22) Date of filing: **27.10.2021**

(51) International Patent Classification (IPC):
$H01M\ 4/16$ (2006.01)    $H01M\ 4/56$ (2006.01)
$H01M\ 4/62$ (2006.01)    $H01M\ 4/68$ (2006.01)
$H01M\ 4/73$ (2006.01)    $H01M\ 4/76$ (2006.01)
$H01M\ 4/82$ (2006.01)    $H01M\ 10/14$ (2006.01)
$H01M\ 10/18$ (2006.01)    $H01M\ 50/529$ (2021.01)

(52) Cooperative Patent Classification (CPC):
H01M 50/529; H01M 4/16; H01M 4/56;
H01M 4/625; H01M 4/685; H01M 4/73; H01M 4/76;
H01M 4/82; H01M 10/14; H01M 10/18

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2020 IN 202021047108**

(71) Applicant: **Indian Oil Corporation Limited
400 051 Mumbai Bandra (East) (IN)**

(72) Inventors:
• **MOHANASUNDARAM, Palvannan**
  **121007 Haryana (IN)**
• **SAMALA, Bhanumurthy**
  **121007 Haryana (IN)**
• **RAMAN, Naduhatty Selai**
  **121007 Haryana (IN)**
• **SHARMA, Shailendra Kumar**
  **121007 Haryana (IN)**
• **RAMAKUMAR, Sankara Sri Venkata**
  **121007 Haryana (IN)**

(74) Representative: **Turner, Craig Robert et al
AA Thornton IP LLP
Octagon Point
5 Cheapside
London EC2V 6AA (GB)**

(54) **UNI-ELECTROGRID LEAD ACID BATTERY AND PROCESS OF MAKING THE SAME AND PERFORMANCE THEREOF**

(57) The present invention relates to a uni-electrogrid lead acid battery and process of making the same. More particularly, the present invention relates to uni-electro grid plate comprising a) tubular unielectro grid plate comprising of positive tubular grid plate and negative flat grid plate; or flat unielectrogrid plate comprising of positive flat grid plate and negative flat grid plate; b) nonconductive substrate comprising positive tubular grid with positive active material on its first side and negative flat grid with negative active material on its second side; or positive flat grid with positive active material on its first side and negative flat grid with negative active material on its second side; c)at least single in one side of the grid or multiple interconnectors placed between the positive and negative grid; and d) sealant. Also, it provides tubular unielectro grid plate or flat unielectrogrid plate and process for preparing the same.

Figure 4a: Varying Limiting Voltage

Figure 4b: Varying Limiting Current

Figure: 4 ( Present Invention): (a) and (b)

EP 3 993 101 A1

**Description**

<u>**FIELD OF THE INVENTION:**</u>

The present invention relates to a uni-electrogrid lead acid battery and process of making the same. More particularly, the present invention relates to uni-electro grid plate comprising a) tubular unielectro grid plate comprising of positive tubular grid plate and negative flat grid plate; or flat unielectrogrid plate comprising of positive flat grid plate and negative flat grid plate; b) non-conductive substrate comprising positive tubular grid with positive active material on its first side and negative flat grid with negative active material on its second side; or positive flat grid with positive active material on its first side and negative flat grid with negative active material on its second side; c) at least single in one side of the grid or multiple interconnectors placed between the positive and negative grid; and d) sealant. Also, it provides tubular unielectro grid plate or flat unielectrogrid plate and process for preparing the same.

The present invention provides a tubular uni-electrogrid configuration using unielectrogrid which contains tubular positive grid and negative flat grid with non conductive substrate. Also, the present invention provides a method of preparing tubular configuration using negative flat plate grid and positive tubular grid with non conductive substrate using interconnectors with equal distance of the periphery or top and bottom of the grids joining with positive tubular grid and negative flat grid through the non conductive substrate.

<u>**BACKGROUND OF THE INVENTION:**</u>

Conventional Bipolar battery construction comprises a collection of electrode plates that each contains a flat negative plates and flat Positive plates with a conductive substrate. The Bipolar batteries are made up of separate cells that are defined bipolar Plates. The Bi-Polar plate generally contains conductive metal foil, ceramic or composites as a substrate. The Bipolar plates are capable of providing improved current flow over the conventional monopolar batteries. But conventional bipolar batteries having the limitations like the conductive bipolar plate or substrate reacts with electrolyte and hence increases the side reactions. Further adhesion of the active material with the conductive substrate is also an issue in the conventional Bipolar Flat plate Lead acid battery. Due to side reactions between the conductive substrate and electrolyte, the performance and life cycle of the battery decreases.

US patent No 4275130 disclosed the polymer based conductive composite bipolar plate using carbon fibers or particles as the filler for the electrical conductivity.

US patent No 5348817 disclosed a bipolar battery having a multi layer metallic structure. Among the multi layers, one layer contains titanium or tin and another layer contains copper or tin.

US patent No 5126218 disclosed conductive titanium suboxide as a substrate material for bipolar plates.

US Patent No 6077623 disclosed bipolar battery contains electrical conductive multilayered electrode. Titanium sheet and electrical conductive carbon layers are used.

US Patent No 8357469 disclosed conductive foil is used as current collector in Bipolar plate.

US Patent No 9570737 disclosed conductive Bipolar plate comprising of electrical conductive Silicon wafer.

JP4720384 disclosed using of gel electrolyte for preventing leaking between the adjacent cell in Bipolar battery.

US 5296320 disclosed coaxial tubular positive and tubular negative bipolar electrodes connected using coaxial to the walls using conductive plates.

The above-mentioned prior arts disclose only Bipolar Lead acid battery, which contain conductive substrate like electrically conductive metals, ceramics, silicon material etc in the form of foils, layer etc. The main disadvantage of the conventional Bi-Polar lead acid battery is that the conductive bipolar plate or substrate reacts with electrolyte and hence increases the side reactions. Further, adhesion of the active material with the conductive substrate is also an issue in the Bipolar Lead acid battery. Due to the side reactions, the performance and life cycle of the battery decreases. Mono-polar battery, the external wires are connected from one cell to another cell as well as electrode to another electrode. In mono polar battery, current flow through one path from one plate to another plate as well as cells. So, the performance of the battery decreases due to increased resistance.

<u>**Summary of the Present Invention:**</u>

The present invention relates to a uni-electrogrid lead acid battery and process of making the same. More particularly, the present invention relates to uni-electro grid plate comprising a) tubular unielectro grid plate comprising of positive tubular grid plate and negative flat grid plate; or flat unielectrogrid plate comprising of positive flat grid plate and negative flat grid plate; b) non-conductive substrate comprising positive tubular grid with positive active material on its first side and negative flat grid with negative active material on its second side; or positive flat grid with positive active material on its first side and negative flat grid with negative active material on its second side; c) at least single in one side of the grid or multiple interconnectors placed between the positive and negative grid; and d) sealant. Also, it provides tubular unielectro grid plate or flat unielectrogrid plate and process for preparing the same.

The present invention provides a tubular uni-electrogrid configuration using unielectrogrid which contains tubular positive grid and negative flat grid with non conductive substrate. Also, the present invention provides a method of preparing tubular configuration using negative flat plate grid and positive tubular grid with non conductive substrate using interconnectors with equal distance of the periphery of the grids or top and bottom of the grids joining with positive tubular grid and negative flat grid through the non conductive substrate.

The present invention provides uni-electrogrid lead acid battery having life cycle improvement upto 150% over mono-polar battery; charging time reduced upto 50 to 80%; and higher Ampere hour (Ah) and Voltage battery.

## Objectives of the present invention:

It is the primary objective of the present invention is to provide the process for the preparation of Tubular as well as Flat Plate Configuration using Uni-electrogrids with multiple current flow path as well as short path of current flow between Positive and Negative Plate and same plate act as positive plate of the one cell and another side act as negative plate of the another cell.

Another main objective of the present invention is to prepare a uni-electrogrid battery which is compatible to electrolyte and improved performance having fast charging characteristics and Life cycle.

Another objective of the present invention is to prepare the non conductive substrate and grids provide the support and good adhesion of Positive active and negative material for uni-electrogrid lead acid battery.

Further objective of the present invention is to provide uni-electrogrids lead acid battery having the fast charging characteristics.

Further objective of the present invention is to prepare uni-electrogrids lead acid battery having the more life than conventional mono-polar battery.

## Brief description of drawings:

To further clarify advantages and aspects of the invention, a more particular description of the invention will be rendered by reference to specific embodiments thereof, which is illustrated in the appended drawings. It is appreciated that the drawings depict only typical embodiments of the invention and are therefore not to be considered limiting of its scope.

Figure 1 illustrates conventional bipolar battery constructed with Lead metal foil;

**Figure 2** illustrates unielectrogrid lead acid battery (Voltage Vs Time) in accordance with an embodiment of the present invention;

**Figure 3** illustrates unielectrogrid lead acid battery (Voltage Vs Cycle) in accordance with an embodiment of the present invention;

**Figure 4** illustrates 12V/7Ah (Unielectrogrid -Flat plate) in accordance with an embodiment of the present invention; and

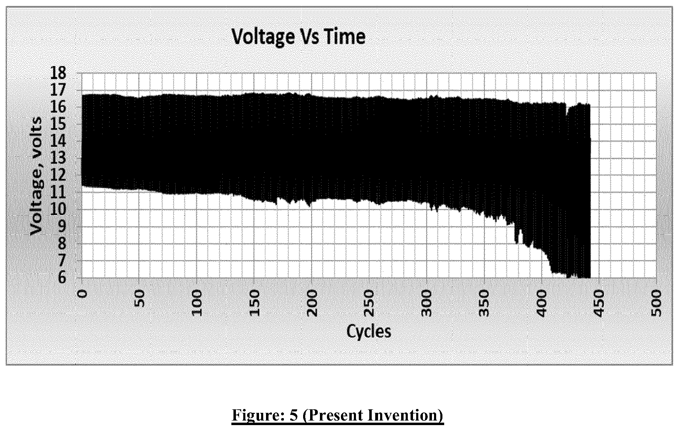

**Figure 5** illustrates tubular unielectrogrid battery Life cycle evaluation in accordance with an embodiment of the present invention.

**Figure 6** illustrates construction feature in accordance with an embodiment of the present invention. In figure 6, non-conductive substrate is represented by (a), non-conductive surface is represented by (b), interconnectors between negative and positive grid are represented by c), equal distance between the interconnectors are represented by d), sealing of interconnectors is represented by e) and grid is represented by f).

## Figure: 6 (Present Invention)

Further, those of ordinary skill in the art will appreciate that elements in the drawings are illustrated for simplicity and may not have been necessarily drawn to scale. For example, the dimensions of some of the elements in the drawings may be exaggerated relative to other elements to help to improve understanding of aspects of the invention. Furthermore, one or more elements may have been represented in the drawings by conventional symbols, and the drawings may show only those specific details that are pertinent to understanding the embodiments of the invention so as not to obscure the drawings with details that will be readily apparent to those of ordinary skill in the art having benefit of the description herein.

## Detailed Description of the invention:

For the purpose of promoting an understanding of the principles of the invention, reference will now be made to the embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It should be understood at the outset that although illustrative implementations of the embodiments of the present disclosure are illustrated below, the present invention may be implemented using any number of techniques, whether currently known or in existence. The present disclosure should in no way be limited to the illustrative implementations, drawings, and techniques illustrated below, including the exemplary design and implementation illustrated and described herein.

The terminology and structure employed herein is for describing, teaching and illuminating some embodiments and their specific features and elements and does not limit, restrict or reduce the spirit and scope of the invention.

Unless otherwise defined, all terms, and especially any technical and/or scientific terms, used herein may be taken to have the same meaning as commonly understood by one having an ordinary skill in the art.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

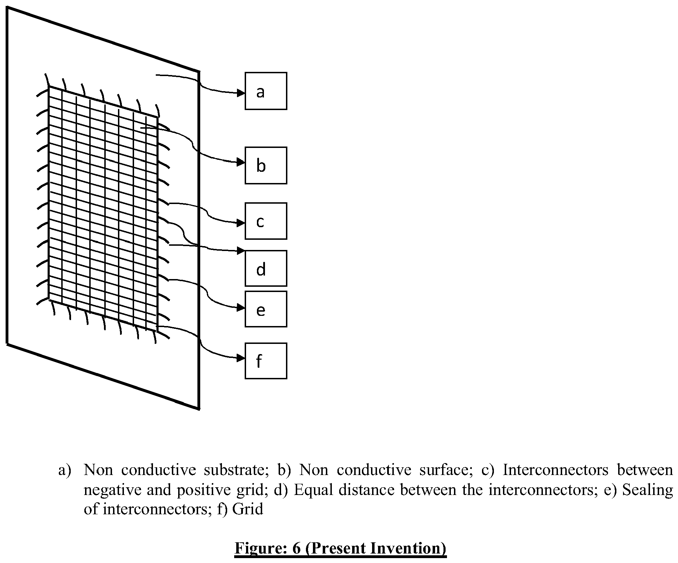

In one of the embodiment, the present invention relates to uni-electro grid plate comprising a) tubular unielectro grid plate comprising of positive tubular grid plate and negative flat grid plate; or flat unielectrogrid plate comprising of positive flat grid plate and negative flat grid plate; b) non-conductive substrate comprising positive tubular grid with positive active material on its first side and negative flat grid with negative active material on its second side; or positive flat grid with positive active material on its first side and negative flat grid with negative active material on its second side; c) at least single in one side of the grid or multiple interconnectors placed between the positive and negative grid; and d) sealant. **Figure 6** illustrates construction feature in accordance with an embodiment of the present invention. In figure 6, non-conductive substrate is represented by (a), non-conductive surface is represented by (b), interconnectors between negative and positive grid are represented by c), equal distance between the interconnectors are represented by d), sealing of interconnectors is represented by e) and grid is represented by f).

In yet another embodiment, the present invention relates to a uni-electro grid plate, wherein the positive grid, the negative grid and the interconnectors comprises lead metal or its alloys and the alloys comprising calcium or antimony or tin or silver or selenium or mixture thereof.

In one of the embodiment, the present invention relates to the uni-electro grid, wherein the alloying elements ranges from 0 to 3 weight% in the lead alloy.

In yet another embodiment, the present invention relates to the uni-electro grid plate, wherein the non-conductive substrate comprises of Acrylonitrile butadiene styrene or Poly propylene or Acrylic or High density Poly ethylene.

In one of the embodiment, the present invention relates to the uni-electro grid plate, wherein in the flat uni-electro grid plate, the distance between the two adjacent interconnectors is uniformly maintained on the length side and on the width side and preferably, the distance between the adjacent interconnectors is ranging from 0.005 m to 0.05 m; and number of interconnectors on the length side is selected in the ratio of length of the flat plate to distance between the two adjacent interconnectors; and number of interconnectors on the width side is selected in the ratio of width of the flat plate to distance between the two adjacent interconnectors.

In yet another embodiment, the present invention relates to the uni-electro grid plate, wherein in the tubular uni-electro grid plate, the number of interconnectors between the positive tubular grid plate and the negative flat grid plate is equal to numbers of tubes present in the glandlets of the tubular positive grid plate; and the distance between the adjacent interconnectors is equal to the ratio of top or bottom length of the tubular grid plate to the number of tubes in the positive tubular glandlets; and wherein the distance between the two adjacent interconnectors is uniformly maintained in the top or bottom side of the positive tubular grid and negative flat grid .

In one of the embodiment, the present invention relates to the uni-electro grid plate, wherein the positive active material (PAM) comprises Lead oxide, Dinel Fibre, water and sulphuric acid.

In yet another embodiment, the present invention relates to the uni-electro grid plate, wherein the negative active material (NAM) comprises lead oxide, Dinel Fiber, Carbon black or Carbon Nano tube or mixture thereof, Vanisperse (lignin), Barium sulphate, water and sulphuric acid.

In one of the embodiment, the present invention relates to the uni-electro grid plate, wherein the lead calcium positive grid (flat) comprises calcium 2 weight %; lead calcium negative grid comprises 2 weight % calcium; lead tin interconnectors comprises 2 weight % of Tin; and the non-conductive substrate is Acrylonitrile Butadiene Styrene sheet (ABS) or Poly propylene or Styrene acrylonitrile.

In yet another embodiment, the present invention relates to the uni-electro grid plate, wherein the sealant comprises acid resistant epoxy resins.

In one of the embodiment, the present invention relates to a process of preparation of flat plate or tubular uni-electrogrids, said process comprising:

i) preparing Lead calcium positive grid (flat) comprising 2 weight % calcium and the positive active material (PAM) using Lead oxide, Dinel Fibre, water and sulphuric acid; coating the positive grid with positive active material and curing the coated positive grid for at least 48 hours;

ii) tubular positive plate comprises of active material as Lead oxide;

iii) preparing Lead calcium negative grid comprising 2 weight % calcium and the negative active material (NAM) using lead oxide, Dinel Fiber, Carbon black, Vanisperse (lignin), Barium sulphate, water and sulphuric acid; coating the negative grid with negative active material and curing the coated negative grid for at least 48 hours;

a) wherein the flat uni-electrogrid comprises of connecting the flat positve grid and flat negative grids using multiple Lead-tin interconnectors around the circumference of the grid through the non-conductive substrate; wherein the distance between the two adjacent interconnectors is uniformly maintained on the length side and on the width side, preferably the distance between the adjacent interconnectors is ranging from 0.005 metre to 0.05 metre and the number of interconnectors on the length side is selected in the ratio of length of the flat plate to distance between the two adjacent interconnectors; and number of interconnectors on the width side is selected in the ratio of width of the flat plate to distance between the two adjacent interconnectors ; or

b) wherein the tubular uni-electro grid comprises of connecting the tubular positive grid and negative flat grid using multiple lead-tin interconnectors on top or bottom wherein the number of interconnectors between the positive tubular grid and negative flat grid is selected which is equal to numbers of tubes present in the glandlets of the tubular positive grid and the distance between the adjacent interconnectors is equal to the ratio of top or bottom length of the tubular grid to the number of tubes in the positive tubular glandlets and wherein distance between the two adjacent interconnectors is uniformly maintained on the top or bottom side of the positive tubular grid and negative flat grid;

iv) sealing the interconnectors and the non conductive substrate sheet using a sealant, the sealant preferably comprising acid resistant epoxy resins; wherein one side of the non-conductive substrate sheet comprises Positive grid and other side of the non-conductive substrate sheet comprises Negative grid; and

v) flowing the current through positive and negative plate through multiple interconnectors.

In yet another embodiment, the present invention relates to a process of preparation of flat plate or tubular uni-electrogrids, wherein the unielectrodegrid flat or tubular configuration provides both positive and negative plate in a single plate, the one side act as positive plate and another side act as a negative plate for another cell.

In one of the embodiment, the present invention relates to a process of preparation of flat plate or tubular uni-electrogrids, wherein Lead Antimony positive grid (flat) comprises Antimony (Sb) 1.75 weight %.

In yet another embodiment, the present invention relates to a process of preparation of flat plate or tubular uni-electrogrids, wherein the non conductive substrate is Acrylonitrile Butadiene Styrene sheet (ABS) or Poly propylene sheet (PP) or Styrene Acrylonitrile.

In one of the embodiment, the present invention relates to a process for preparing unielectrogrid battery, said process comprising the steps of :

i) using flat negative as first end grid plate and a separator between the positive and negative plates;

ii) stacking of unielectrogrid plates as obtained by the process of preparation of flat plate grid or tubular unielectrogrids and covering with the separator; and

iii) repeating the step (ii) for multiple unielectrogrid plates and placing flat positive as second end grid plate for obtaining unielectrogrid battery.

In another embodiment, the present invention provides a process for preparing Unielectrogrid battery, wherein the separator comprises Adsorptive Glass Mat (AGM) or Poly ethylene (PE).

In yet another embodiment, the present invention relates to a process for preparing tubular Unielectrogrid battery, said process comprising:

i) preparing Lead calcium tubular positive grid comprising calcium 2 weight % and multiple tubes wherein each tube comprises positive active material;

ii) preparing Lead calcium negative grid comprising 2 weight% calcium and negative active material (NAM) prepared using lead oxide, Dinel Fiber, Carbon black, Vanisperse (lignin), Barium sulphate, water and sulphuric acid, wherein the negative flat grid is coated with negative active material and subjected for curing for at least 48 hours;

iii) connecting the positive grid and negative grids using multiple Lead interconnectors top and bottom of the grid through the non-conductive substrate and providing the interconnections between the top and bottom of the positive and negative grids; wherein one side of the non-conductive substrate sheet comprises positive grid and other side of the non-conductive substrate sheet comprises negative grid; wherein the tubular uni-electro grid comprises of connecting the tubular positive grid and negative flat grid using multiple lead-tin interconnectors on top or bottom wherein the number of interconnectors between the positive tubular grid and the negative flat grid is equal to the numbers of tubes present in the glandlets of the tubular positive grid; and the distance between the adjacent interconnectors selected is equal to the ratio of top or bottom length of the tubular grid to the number of tubes in the positive tubular glandlets and wherein distance between the two adjacent interconnectors is uniformly maintained on the top or bottom side of the positive tubular grid and negative flat grid;

iv) sealing the interconnectors and the non-conductive substrate sheet using a sealant, preferably comprising acid resistant epoxy resins; and

v) flowing current through positive and negative plate through unigrid multiple interconnectors; wherein a single plate act as a positive plate of the one cell and negative plate for the other cell.

In one of the embodiment, the present invention relates to a process for preparing tubular Unielectrogrid battery, wherein the non-conductive substrate comprises Acrylonitrile Butadiene Styrene sheet (ABS) or Poly propylene sheet (PP) or Styrene AcryloNitrile (SAN).

In yet another embodiment, the present invention relates to a process for preparing Unielectrogrid battery or a process for preparing tubular Unielectrogrid battery, wherein the uni-electrogrid Lead acid battery is prepared using flooded lead acid battery type or Gel electrolyte or with Adsorptive Glass mat or Flooded adsorptive glass mat.

In one of the embodiment, the present invention relates to a process for preparing uni-electrogrid battery or a process for preparing tubular uni-electrogrid battery, wherein the specific gravity of the electrolyte sulphuric acid used in the uni-electrogrid is in the range of 1.05 g/cc to 1.34 g/cc.

In yet another embodiment, the present invention relates to flat or tubular uni-electrogrid battery comprising the flat or tubular positive grid, flat negative grid, non conductive substrate, positive active material, negative active material, multiple interconnectors and sealant, wherein a single plate act as a postive plate of the one cell and negative plate for the other cell, obtained by the process for preparing Unielectrogrid battery or a process for preparing tubular Unielectrogrid battery,

exhibiting upto 150% improvement in life cycle over mono-polar battery, upto 50 to 80% reduction in charging time, providing 12 Volts, 24 Volts, 48Volts and 7 Ah, 25 Ah, 75 Ah, 250 Ah and 400 Ah battery using unielectrogrids by stacking arrangements; and decrease in the resistance of the battery;

$$\text{Resistance} = l/(\rho * \Sigma na)$$

n=1,2,3,....n in which n=is number of interconnectors,
1=length of the interconnectors, and
a is the cross sectional area of individual connectors.

The present invention provides a tubular uni-electrogrid configuration using unielectrogrid which contains tubular positive grid and negative flat grid with non conductive substrate. Also, the present invention provides a method of preparing tubular configuration using negative flat plate grid and positive tubular grid with non conductive substrate using interconnectors with equal distance of the periphery of the grids or top and bottom of the grids joining with positive tubular grid and negative flat grid through the non conductive substrate.

Accordingly, the present invention relates to a unielectrogrid which contains nonconductive substrate and using equal distance interconnectors along the circumference between the positive and negative grid. Further unielectro grid contains the positive and negative active material on one side to other side forms the unielectrogrid plate which act as positive as well as negative plate.

In detailed feature of the present invention, the uni-electrogrid avoids the conductive foil or sheet and the interference of electrolyte with the conductive substrate and grid structure which provides structural integrity of the plate as well as adhesion of active material and minimizes the shedding of active material. Non conductive and electrolyte compatible substrate comprises of materials made from polymers such as Acrylonitrile Butadiene styrene or Poly propylene or Acrylic or High density Poly ethylene or Styrene acrylonitrile.

According to another feature, the present invention deals with positive grid which contains Lead metal or its alloys. The alloying elements such as Calcium or Antimony or Tin or silver or Selenium or mixture thereof. In Lead alloy the alloying elements ranging from 0 to 3 weight%. The grid shape to be rectangular or square or Circle or polyconal shape.

One more feature of the present invention deals with negative grid which contains Lead metal or its alloys. The alloying elements such as Calcium or Antimony or Tin or silver or Selenium or mixture there of. In Lead alloy the alloying elements ranging from 0 to 3 weight%. The grid shape to be rectangular or square or Circle or polyconal shape.

One important feature of the present invention deals with interconnectors which is in the form of strips or wires or rods etc. The interconnectors which contains lead metal or or its alloys. The alloying elements such as Calcium or Antimony or Tin or silver or Selenium or mixture thereof. In Lead alloy, the alloying elements ranging from 0 to 3 weight%.

One more feature of the present invention deals with placing of single or multiple interconnectors connecting between the flat positive and negative grids. Further, the distance between the two adjacent interconnectors maintained uniform distance in the length side. Further, the distance between the two adjacent interconnectors maintained uniform in the width side also. The distance is selected from the range of 0.005 m to 0.05 m.

In one more feature of the present invention, Unielectrogrid Flat plate battery consist of minimum spacing is selected between the two consecutive interconnectors is 0.005 metre and number of interconnectors between the Positive flat grid and Negative Flat grid in length side is selected is in the ratio of length of the grid (1) to spacing distance between the two consecutive interconnectors in each length side of the grid and number of interconnectors between the Positive flat grid and Negative Flat grid width side is selected in the ratio of width of the grid(b) to spacing distance between the two consecutive interconnectors in each width sides of the grid.

One more main feature of the present invention deals with fabricate unielectro grid plate using positive flat grid, negative flat grid, Positive and negative active material non conductive substrate, interconnectors and Sealant. Interconnectors are placed with equal distance in the positive grid and negative grid along the pheripheral of the grid and perpendicular pass through the nonconductive substrate. The selection of number of inter connectors depends on length and width of the positive and negative grids and need of current density of unit square. One side of the non conductive surface is having the positive grid and other side is having negative grid. Both the grids are united through the interconnectors through soldering with the Positive and Negative flat Grid. Multiple interconnectors and grids along the pheriphery provide the shortest and multiple current flow path between the positive and negative grid. Surface of the Interconnectors and pheriperal of the positive and negative grid and non conductive surface sealed with electrolyte resistant epoxy resins. Unielectrode occupies less surface area as compare to foil or sheet. Thus, Unielectrogrid provides the minimum surface area to the electorolyte reactions and hence minimize the electrolyte side reactions. Further, unielectro grid plate act as a positive and negative plate in single plate.

One more feature of the present invention deals to prepare the tubular configuration using uni electrogrid which contains tubular positive grid and flat negative grid, non conductive substrate, positive and negative active material, interconnectors and sealant. In flat monopolar and conventional bipolar lead acid battery having the disadvantage of positive active material shedding from the plate. Further in monopolar flat and tubular the current will be flow from one electrode to another electrode in one way and uni directional using single wire from one cell to another cell. This is limiting the current flow path as well as increase the ohmic resistance. Due to positive active material shedding the battery performance and life diminishes. The present invention deals with producing tubular positive and negative flat configuration by using of multiple polyester tubular glands and negative flat grid united through interconnectors along the phriphery of the positive tubular grid and negative flat grid. To minimize the active material shedding from the positive plate. Both the grids are united through the interconnectors through soldering with the Positive tubular and Negative flat Grid. Equal spacing multiple interconnectors and grids along the periphery provide the shortest current flow path as well as multiple current flow path between the positive and negative grid. The shortest current flow path diminish the ohmic resistance. Surface of the Interconnectors and peripheral of the positive and negative grid and non conductive surface sealed with electrolyte resistant epoxy resins. Thus Uni-electrogrid protected from the electorolyte reactions. Thus, Unielectrogrid provides the minimum surface area to the electorolyte reactions and hence minimize the electrolyte side reactions. Further, unielectro grid plate act as a positive tubular and negative plate flat in single plate.

Thus, Unielectro grid tubular contains tubular positive grid and negative flat grid with positive and negative active materials and non conductive surface.

One more embodiment of the present invention deals to prepare the tubular battery using uni electrogrid which contains tubular positive grid and flat negative grid, non conductive substrate, positive and negative active material, interconnectors and sealant. Due to positive active material shedding, the battery performance and life diminishes. The present invention deals with producing tubular positive and negative flat battery by using of multiple polyester tubular glands and negative flat grid united through interconnector along the top and bottom of the positive tubular grid and negative flat grid. To minimize the active material shedding from the positive plate. Both the grids are united through the interconnectors through soldering with the Positive and Negative Grid. Top and bottom of the interconnection and grids along the top and bottom provide the shortest current flow path between the positive and negative grid.

Further, tubular uni-electrogrid consists of number of interconnectors between the Positive tubular grid and negative flat grid is selected which is equal to numbers of tubes present in the glandlets of top and bottom of the grid and spacing distance between the interconnectors selected which is equal to the ratio of top or bottom length of the grid to number of tubes in the positive tubular gland lets

Surface of the Interconnectors of the positive and negative grid and non conductive surface sealed with electrolyte resistant epoxy resins. Thus, Unielectrogrid protected from the electorolyte reactions. Thus, Unielectrogrid provides the minimum surface area to the electorolyte reactions and hence minimize the electrolyte side reactions. Further, unielectro grid plate act as a positive tubular of the one cell and negative flat plate of the other cell in single plate.

One more objective of the present invention tubular uni-electrogrid consists of number of interconnectors between the Positive tubular grid and negative flat grid is selected which is equal to numbers of tubes present in the glandlets of top and bottom of the grid and spacing between the interconnectors selected which is equal to the ratio of top or bottom length of the grid to number of tubes in the positive tubular gland lets.

One more feature of the present invention deals preparing High Voltage & High AH battery with the use of unielectrogrid structure to increase the thickness of active material as well as multiple current flow path and short current flow path between the positive and negative electrode. Monopolar battery is limited to Lower voltage battery construction is due to Monopolar arrangement due to increased ohmic resistance. In Bipolar battery, battery construction is limited to Less Ah due to Foil/Sheet as a current collector as well as cannot increase the thickness of active material. In Bipolar battery, increasing thickness of the active material leads to all the active material not utilized properly and hence decrease the capacity.

One more feature of the present invention deals with current flow between the positive electrode of the one cell and negative electrode of the another cell in unielectro grid lead acid battery is Multiple current flow and short path along the periphery of the grids. In monopolar battery, the current flow is single path way through the wire. In Bipolar battery, Perpenticular and Uniform current density across the active material.

One more feature of the present invention is to prepare the less resistance battery using unielectrogrid having multiple interconnectors with short length with more surface area. In Monopolar battery resistance between two cell is R= L/($\rho$* A) where L is the length of the interconnecting wire and A is the Area.).But in unielectrogrid lead acid battery R= 1/($\rho$* $\Sigma$na), where n=1,2,3,....n in which n=is number of interconnectors, 1=length of the interconnectors and "a" is the cross sectional area of individual connectors. Unielectrogrid provides reduction in length and increasing in total cross sectional area and hence decrease the resistance of the battery.

One more feature of the present invention, Unielectrogrid Lead acid battery is prepared using flooded lead acid battery type or Gel electrolyte or with Adsorptive Glass mat or Flooded adsorptive glass mat. The electrolyte sulphuric acid used in unielectrogrid with the specific gravity is in the range of 1.05 g/cc to 1.34 g/cc.

One more feature of the present invention deals with preparation of 12 Volts, 24 Volts, 48Volts and 7 Ah, 25 Ah, 75 Ah, 250 Ah and 400 Ah battery using uni-electrogrids by stacking arrangements.

One more feature of the present invention deals with preparation of horizondal or Vertical mode of uni electro grid Lead acid battery. In horizondal mode the specific gravity of the sulphuric acid maintained uniform along the uni electro grid to minimize the electrolyte stratification and hence improve the performance and life of unielectrogrid lead acid battery.

One more important feature of the present invention deals with unielectro grid battery having the fast charging characteristics. The time required to charge the unielectro grid battery is reduced upto 80% as compared to conventional mono polar battery.

One more feature of the present invention deals with uni electro grid flat plate battery having 150 % more life than conventional monopolar battery.

One more feature of the present invention deals with unielectrogrid lead acid battey deals in Mobility, Energy storage application also.

## EXAMPLES

The present invention illustrated with the help of following examples, which are not intended to limit the scope of the invention and any such modification therein falls within the scope of this invention. It is to be understood that both the foregoing general description and the following detailed description are exemplary and explanatory only and are intended to provide further explanation of the subject matter.

## Preparation of unielectrogrids

### Example: 1

Lead calcium Positive grid (Flat) which contains calcium 2 weight %. The length of the Positive flat grid (1) is 0.1 m. The positive active material (PAM) prepared using Lead oxide, Dinel Fibre, water and sulphuric acid. The Positive grid is coated with Positive active material and subjected for curing. Lead calcium negative grid which contains 2 weight % calcium. The length of the Negative grid is 0.1 m (b). The negative active material (NAM) prepared using lead oxide, Dinel Fiber, Carbon black, Vanisperse (lignin), Barium sulphate, water and sulphuric acid. The negative grid is coated with negative active material and subjected for curing. After 72 hrs of curing, the Positve grid and negative grids are connected using Lead-tin interconnectors around the circumference of the grid through the non conductive substrate. The number of interconnectors selected per length side is 10. The spacing between the interconnectors are 0.01 m in length side (1/10). The number of interconnectors selected per width side is 10. The spacing between the interconnectors are 0.01 m in the width side (b/10). The lead tin interconnectors which contains 2 weight % of Tin with the thickness of 2 mm. The non conductive substrate is Acrylonitrile Butadiene Styrene sheet (ABS) with the thickness of 1.6 mm. The interconnectors and ABS sheet is sealed with using of acid resistant epoxy resins. So one side of the ABS sheet consists Positive grid and other side of the ABS sheet consists of Negative grid. Thus unielectrodegrids are prepared using of above said positive and negative grid interconnected through ABS sheet connected and sealed with acid resistant epoxy resin and it is prevented to react with electrolyte. The current flow through positive and negative plate through multiple interconnectors. Thus unielectrodegrid flat configuration provides both positive and negative plate in single plate. Positive active material and negative active material pasted in each grid is about 64 g.

**Example: 2**

Lead Antimony Positive grid (Flat) which contains Antimony (sb) 1.75 weight %. The length of the Positive flat grid (1) is 0.1 m. The positive active material (PAM) prepared using Lead oxide, Dinel Fibre, water and sulphuric acid. The Positive grid is coated with Positive active material and subjected for curing. Lead calcium negative grid which contains 2 weight % calcium. The length of the Negative grid is 0.1 m (b). The negative active material (NAM) prepared using lead oxide, Dinel Fiber, Carbon black, Vanisperse (lignin), Barium sulphate, water and sulphuric acid. The negative grid is coated with negative active material and subjected for curing. After 72 hrs of curing, the Positve grid and negative grids are connected using Lead-tin interconnectors around the circumference of the grid through the non conductive substrate. The number of interconnectors selected per length side is 20. The spacing between the interconnector is 0.005 m in length side (1/20). The number of interconnectors selected per width side is 20. The spacing between the interconnectors are 0.005 m in the width side (b/10). The lead tin interconnectors which contain 2 weight % of Tin with the thickness of 2 mm. The non conductive substrate is Acrylonitrile Butadiene Styrene sheet (ABS) with the thickness of 1.6 mm. The interconnectors and ABS sheet is sealed with using of acid resistant epoxy resins. So, one side of the ABS sheet consists Positive grid and other side of the ABS sheet consists of Negative grid. Thus, unielectrogrids are prepared using above said positive and negative grid interconnected through ABS sheet connected and sealed with acid resistant epoxy resin and it is prevented to react with electrolyte. The current flow through positive and negative plate through unielectrodegrid multiple interconnectors. Thus unielectrodegrid flat configuration provides both positive and negative plate in single plate. So, the one side act as positive plate another side act as a negative plate for another cell. Positive active material and negative active material pasted in each grid is about 64 g.

**Example:3**

Lead calcium Positive grid which contains calcium 2 weight %. The length of the Positive grid (1) is 0.5 m. The positive active material (PAM) prepared using Lead oxide, Dinel Fibre, water and sulphuric acid. The Positive grid is coated with Positive active material and subjected for curing. Lead calcium negative grid which contains 2 weight % calcium. The length of the Negative grid is 0.5 m (b). The negative active material (NAM) prepared using lead oxide, Dinel Fiber, Carbon black, Vanisperse (lignin), Barium sulphate, water and sulphuric acid. The negative grid is coated with negative active material and subjected for curing. After 72 hrs of curing, the Positve grid and negative grids are connected using Lead-tin interconnectors around the circumference of the grid through the non conductive substrate. The number of interconnectors selected per length side is 50. The spacing between the interconnectors are 0.01 m in length side (1/50). The number of interconnectors selected per width side is 50. The spacing between the interconnectors are 0.01 m in the width side (b/10). The lead tin interconnectors which contain 2 weight % of Tin with the thickness of 2 mm. The non conductive substrate is Acrylonitrile Butadiene Styrene sheet (ABS) with the thickness of 2 mm. The interconnectors and ABS sheet is sealed with using of acid resistant epoxy resins. So one side of the ABS sheet consists Positive grid and other side of the ABS sheet consists of Negative grid Thus unigrids are prepared using of above said positive and negative grid interconnected through ABS sheet connected and sealed with acid resistant epoxy resin and it is prevented to react with electrolyte. The current flow through positive and negative plate through unielectrogrid multiple interconnectors.

### Example:4

Lead calcium Positive grid which contains calcium 2 weight %. The length of the Positive grid (1) is 0.5 m. The positive active material (PAM) prepared using Lead oxide, Dinel Fibre, water and sulphuric acid. The Positive grid is coated with Positive active material and subjected for curing. Lead calcium negative grid which contains 2 weight % calcium. The length of the Negative grid is 0.5 m (b). The negative active material (NAM) prepared using lead oxide, Dinel Fiber, Carbon Nanotube, Vanisperse (lignin), Barium sulphate, water and sulphuric acid. The negative grid is coated with negative active material and subjected for curing. After 72 hrs of curing, the Positve grid and negative grids are connected using Lead-tin interconnectors around the circumference of the grid through the non conductive substrate. The number of interconnectors selected per length side is 50. The spacing between the interconnectors are 0.01 m in length side (1/50). The number of interconnectors selected per width side is 50. The spacing between the interconnectors are 0.01 m in the width side (b/10).The lead tin interconnectors which contains 2 weight % of Tin with the thickness of 3 mm. The non conductive substrate is Acrylonitrile Butadiene Styrene sheet (ABS) with the thickness of 3 mm. The interconnectors and ABS sheet is sealed with using of acid resistant epoxy resins. So one side of the ABS sheet consists Positive grid and other side of the ABS sheet consists of Negative grid. Thus, unigrids are prepared using of above said positive and negative grid interconnected through ABS sheet connected and sealed with acid resistant epoxy resin and it is prevented to react with electrolyte. The current flow through positive and negative plate through uni-electrogrid multiple interconnectors. Multiple interconnectors provide the short current flow path as well as multiple current flow path between the Positive and Negative plate.

### Example: 5

Lead calcium Positive grid which contains calcium 2 weight %. The length of the Positive grid (1) is 0.6 m. The positive active material (PAM) prepared using Lead oxide, Dinel Fibre, water and sulphuric acid. The Positive grid is coated with Positive active material and subjected for curing. Lead calcium negative grid which contains 2 weight% calcium. The length of the Negative grid is 0.3 m (b). The negative active material (NAM) prepared using lead oxide, Dinel Fiber, Carbon black, Vanisperse (lignin), Barium sulphate, water and sulphuric acid. The negative grid is coated with negative active material and subjected for curing. After 72 hrs of curing, the Positve grid and negative grids are connected using Lead interconnectors around the circumference of the grid through the non conductive substrate. The number of interconnectors selected per length side is 60. The spacing between the interconnectors are 0.01 m in length side (1/60). The number of interconnectors selected per width side is 60. The spacing between the interconnectors are 0.005 m in the width side (b/60). The lead interconnectors which is having the thickness of 2 mm. The non conductive substrate is Poly propylene sheet (PP) with the thickness of 6 mm. The interconnectors and PP sheet is sealed with using of acid resistant epoxy resins. So, one side of the PP sheet consists Positive grid and other side of the PP sheet consists of Negative grid. Thus unielectrogrids are prepared using of above said positive and negative grid interconnected through PP sheet connected and sealed with acid resistant epoxy resin and it is prevented to react with electrolyte. The current flow through positive and negative plate through unielectrogrid multiple interconnectors with multiple flow pathways.

### Construction of unielectrogrid batteries

### Example:6

12V-7AH unielectrogrid battery is constructed using flat negative as end grid plate and Adsorptive Glass Mat (AGM) separator and stacking of unielectrogrid plate as shown in example: 1 and then covered with AGM separator. Further, it is repeated four more unielectrogrid plates then flat positive plate at the end of the battery. Thus, unielectrogrid flat plate battery constructed.

### Example :7

12V-7AH unielectrogrid battery is constructed using negative end grid plate and kept Poly ethylene separator between the positive and negative plates and stacking of unielectrogrid bipolar plate as prepared in **example: 1** and then covered with Poly ethylene (PE) separator . Further it is repeated four more unielectrogrid plates then positive plate at the end of the battery.

### Example :8 (prior Art)

12V-7AH conventional bipolar battery constructed using conventional bipolar plates using lead metal foil as current collector.

### Example: 9 (Prior Art)

12V-7AH conventional monopolar battery constructed using Positive and negative mono polar plates. Six number of 2V-7 AH battery cell connected in series to obtain 12 V-7AH

### Example: 10

12V-7AH unielectrogrid battery is constructed using negative end grid plate and Poly ethylene saparator and stacking of unielectrogrid plate as shown in **example:2** and then covered with Poly ethylene separator. Further it is repeated four more unielectrogrid plates then positive plate at the end of the battery.

### Example: 11

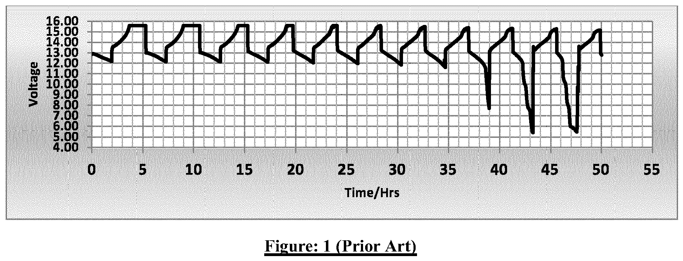

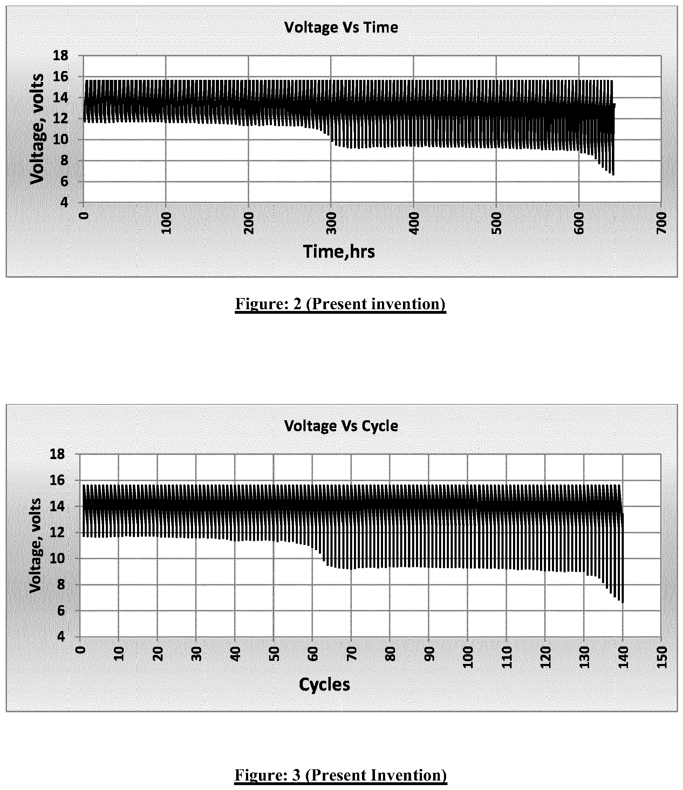

12Volts-7Amperehour unielectrogrid battery constructed as per **example: 6** and conventional bipolar battery constructed as per example: 8. These batteries initially subjected for formation and then subjected as per the test protocol given below. The batteries were subjected for boost charging with constant voltage charging of 16 Volts (V) with limiting current of 1.75 Ampere (A) for 24 hours. After the boost charging the batteries were subjected for C-20 Capacity (CI) with the discharge up to 10.5 V with the current of 0.35 A. Then the batteries were charged upto 130% C1 Capacity. Then the battery was subjected for high rate of discharge (HRD) capacity (C2) upto 6V with the discharge current of 28A. Then the batteries were charged upto 150% of C2 capacity. The above steps C1 and C2 capacity evaluation repeated for two more times. Then the batteries were charged with constant voltage charging 16 Volts (V) with limiting current of 1.75 A for 24 hours. Then batteries were subjected for 50 % Depth of discharge (DOD) life cycle evaluation with the discharge current of 1.75 A for 2 hours and then the batteries were subjected for charging with 4.03 Ampere hours(AH). The above discharging and charging steps were repeated uo tp the battery voltage reached up to 6 Volts. The number of life cycles were noted up to the the batteries were reached upto 6 Volts. The results are given in the **Table No: 1** and the **Figures 1, 2 and 3.**

**Table :1**

| Type of Battery | No of Life cycles |
|---|---|
| Lead metal foil based conventional Bipolar battery | 11 |
| Unielectrogrid lead acid battery | 140 |

### Example: 12 (Life cycle evaluation-Flat plate Unielectrogrid Vs Monopolar battery)

12Volts(V)-7Amperehour(Ah)uni-electrogrid configuration battery constructed as **per example: 6** and conventional mono-polar battery constructed as per example: 9.These batteries initially subjected for formation and then subjected as per the test protocol given below. The batteries were subjected for boost charging with constant voltage charging of 16 Volts (V) with limiting current of 1.75 Ampere (A) for 24 hours. After the boost charging the batteries were subjected for C-20 Capacity (CI) with the discharge up to 10.5 V with the current of 0.35 A. Then the batteries were charged upto 130% C1 Capacity. Then the battery was subjected for high rate of discharge (HRD) capacity (C2) upto 6V with the discharge current of 28A.Then the batteries were charged upto 150% of C2 capacity. The above steps C1 and C2 capacity evaluation repeated for two more times. Then the batteries were charged with constant voltage charging 16 Volts (V) with limiting current of 1.75 A for 24 hours. Then batteries were subjected for 50 % Depth of discharge (DOD) life cycle evaluation with the discharge current of 1.75 A for 2 hours and then the batteries were subjected for charging with 4.03 Ampere hours(AH). The above discharging and charging steps were repeated upto the battery voltage reached up to 6 Volts. The numbers of life cycles were noted up to the batteries were reached upto 6 Volts. The results are given in the **Table No: 2**

| Type of Battery | No of Life cycles |
|---|---|
| Mono-polar battery | 60 |
| Uni-electrogrid lead acid battery | 140 |

### Example: 13 Uni-electrogrid Lead acid battery (Fast charging) AGM Separator

12Volts-7Ah Unielectrogrid battery and conventional monopolar batteries constructed as per example: 6 and 9. Both the batteries were subjected for following testing protocols. After formation both the batteries were subjected for boost charging with Constant voltage at 16 volts with limiting current of 1.75 Ampere for 24 hours. Then the batteries were discharged with 0.35 Ampere current. The time and AH(Capacity-C20) were noted to reach the 10.5 Volts. After the capacity test the batteries were charged with 130% of Capacity C1 with constant voltage charging at 16 Volts with limiting current 1.75 Ampere. During the charging, the time to reach 100%, 115% and 130% of C20 Capacity were noted for Monopolar battery and unielectrogrid battery. The results were given below in **Table No: 3**

| Type of Battery | Time to reach 100% of its capacity(hours) | Time to reach 115% of its capacity(hours) | Time to reach 130% of its capacity(hours) |
|---|---|---|---|
| Mono-polar battery | 8 | 24 | More than 48 hours |
| Uni-electrogrid lead acid battery | 4.25 | 5.92 | 9 |

### Example: 14 (Fast charging)-Poly Ethylene (PE) Separator

12V-7Ah unielectrogrid battery and conventional monopolar batteries constructed as per examples:**10** and 9. Both the batteries were subjected for following testing protocols. After formation both the batteries were subjected for boost charging with Constant voltage at 16 volts with limiting current of 1.75 Ampere for 24 hours. Then the batteries were discharged with 0.35 Ampere current. The time and AH (Capacity-C20) were noted to reach the 10.5 Volts. After the capacity the batteries were charged with 130% of Capacity C1 with constant voltage charging at 16 Volts with limiting current 1.75 Ampere. During the charging, the time to reach 100%, 115% and 130% of C20 Capacity were noted for Mono-polar battery and uni-electrogrid battery. The results were given below in **table: 4**

| Type of Battery | Time to reach 100% of its capacity(hours) | Time to reach 115% of its capacity | Time to reach 130% of its capacity |
|---|---|---|---|
| Mono-polar battery | 8 | 24 | More than 48 hours |
| Uni-electrogrid lead acid battery | 3.91 | 4.66 | 6 |

### Example: 15 (Fast charging with changing of Limiting current or Voltage)

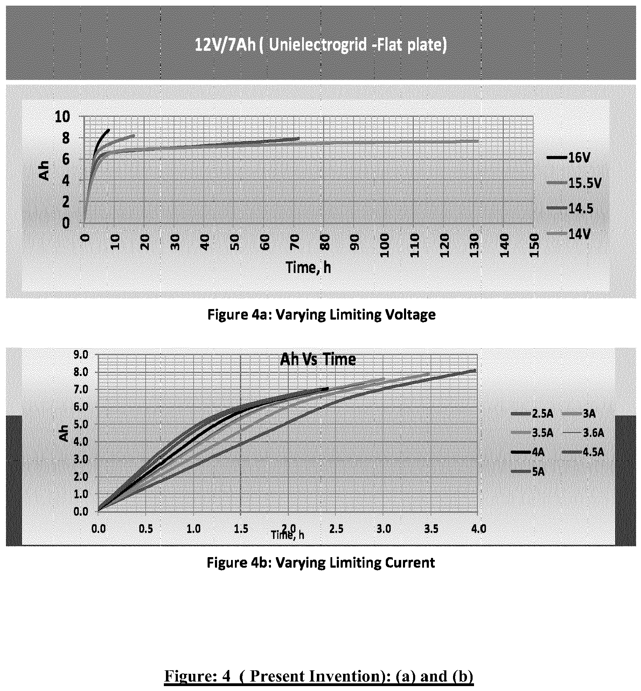

12V-7Ah Uni-electrogrid battery and conventional mono-polar batteries constructed as per **example: 10** and 9. Both the batteries were subjected for following testing protocols. After formation both the batteries were subjected for boost charging with Constant voltage at 16 volts with limiting current of 1.75 Ampere for 24 hours. Then the batteries were discharged with 0.35 Ampere current. The time and AH (Capacity-C20) were noted to reach the 10.5 Volts. After the capacity the batteries were charged with 130% of Capacity C1 with constant voltage charging at 16 Volts with limiting current 2.5A. During the charging, the time to reach 130% of $C_{20}$ Capacity were noted for uni-electrogrid Bi-polar battery. The above test conducted for changing the limiting current 2.5A, 3A, 3.A, 3.6A, 4A, 4.5A and 5A (see **figure 4 b**). Further the test conducted with changing Voltage as 14V, 14.5V, 15.5V with 1.75A current (see **figure 4 a**). The results were given below in **Figure 4.** From the above results 130% of capacity charging achieved within the range of 2.5 hours to 4 hours.

### Example: 16 (Tubular Unielectrogrid battery construction):

Lead calcium Tubular Positive grid which contains calcium 2 weight %. The length of the Positive grid (1) is 0.14 m and width(b) of the grid 0.14 mwhich contains 20 tubes. Each tube contains 11.7 g of positive active material. Lead calcium negative grid which contains 2 weight% calcium. The length(l) of the Negative grid is 0.14 m and width(b) of the negative grid 0.14 m. The negative active material (NAM) prepared using lead oxide, Dinel Fiber, Carbon black, Vanisperse (lignin), Barium sulphate, water and sulphuric acid. The negative flat grid is coated with negative active material and subjected for curing. After 72 hrs of curing, the Positve grid and negative grids are connected using Lead interconnectors around the circumference of the grid through the non conductive substrate. The number of interconnectors selected per length side is 20. The spacing between the interconnectors are 0.007 m in length side (Length of grid(l)/No of Tubes). The number of interconnectors selected per width side is 20. The spacing between the interconnectors are 0.007 m in the width side (b/20). The lead interconnectors which is having the thickness of 2 mm. The interconnections provided between the periphery of the positive and negative grids. Totally 40 numbers of inter connections provided along the pheriphery of the positive and negative grids Top and Bottom side. The non conductive substrate is Acrylonitrile Butadiene Styrene sheet (ABS) with the thickness of 1 mm. The interconnectors and ABS sheet is sealed with using of acid resistant epoxy resins. So, one side of the ABS sheet consists Positive grid and other side of the ABS sheet consists of Negative grid. Thus unielectrogrids are prepared using of above said positive and negative grid interconnected through ABS sheet connected and sealed with acid resistant epoxy resin and it is prevented to react with electrolyte. The current flow through positive and negative plate through unigrid multiple interconnectors. Thus, unielectro grid provide multiple current flow path as well as short flow path between the Positive tubular and negative flat plate. Further, single plate act as a Postive plate of the one cell and negative plate on the other cell. 12V-25AH Unielectrogrid Tubular battery constructed as per steps followed in **example:6.**

**Example: 17 (Tubular Unielectrogrid battery construction with Poly propylene substrate & Top and bottom interconnection):**

Lead calcium Tubular Positive grid which contains calcium 2 weight %. The length of the Positive grid (1) is 0.14 m and width(b) of the grid 0.14 m which contains 20 tubes. Each tube contains 11.7 g of positive active material. Lead calcium flat plate negative grid which contains 2 weight% calcium. The length(l) of the Negative grid is 0.14 m and width(b) of the negative grid 0.14 m. The negative active material (NAM) prepared using lead oxide, Dinel Fiber, Carbon black, Vanisperse (lignin), Barium sulphate, water and sulphuric acid. The negative flat grid is coated with negative active material and subjected for curing. After 72 hrs of curing, the Positve grid and negative grids are connected using Lead-Tin interconnectors around the top and bottom of the tubular positive grid and Flat negative through the non conductive substrate. The number of interconnector selected per top side is no of tubes (20) and along with the top side of the tubular plate. The number of interconnectors selected per bottom side is 20 and along with the bottom side of the tubular plate. The lead interconnectors which is having the thickness of 2 mm. The space between the interconnectors kept as the ratio of top length of the grid to No of tubes in tubular glands (0.007 m). The interconnection provided between the top and bottom of the positive tubular and negative flat grids. The non conductive substrate is Poly Propylene (PP) sheet with the thickness of 1.5 mm. The interconnectors and Poly propylene sheet is sealed with using of acid resistant epoxy resins. So, one side of the PP sheet consists Positive tubular grid and other side of the PP sheet consists of Flat Negative grid. Thus ,uni electro grids are prepared using of above said positive and negative grid interconnected through PP sheet connected and sealed with acid resistant epoxy resin and it is prevented to react with electrolyte. Thus, unielectro grid provide multiple current flow path as well as short flow path between the Positive tubular and negative flat plate. Further, single plate act as a Postive plate of the one cell and negative plate on the other cell. 12V-25AH Unielectrogrid constructed as per steps followed in **example:6.**

**Example: 18 (Tubular Unielectrogrid Battery Life cycle evaluation):**

12V/75 AH Unielectrogrid tubular battery constructed using the Positve tubular plate and negative flat plate are connected using Lead interconnectors. The no of tubes is 12 in the Polyester glandlet. The top and bottom side each 12 interconnectors are used and the lead interconnectors which is having the thickness of 4 mm. The non conductive substrate is Acrylonitrile Butadiene Styrene sheet (ABS) with the thickness of 2 mm. The interconnectors and ABS sheet is sealed with using of acid resistant epoxy resins. So one side of the ABS sheet consists Positive Tubular plate and other side of the ABS sheet consists of Negative flat plate. Thus unielectrogrids are prepared using of above said positive and negative grid plate interconnected through ABS sheet connected and sealed with acid resistant epoxy resin and it is prevented to react with electrolyte. The current flow through positive and negative plate through unielectrogrid multiple interconnectors. The above said battery subjected for life cycle evaluation with the following test protocol. The 75 AH battery is fully charged and then discharged with 15 A for 30 minutes and given rest for 10 min. The above said discharge step and rest repeated upto 6 cycles. So the battery depth of discharge (DOD) maintained at 60 % DOD. After the battery is charged with 8.74 A current for 6 hrs. The above charge, discharge, rest cycles repeated till the battery voltage reaches upto 6Volts. The total no of Cycles are 445 and the results are given in **Figure: 5.** The above test conducted for 12 V/75 Ah Monopolar battery and the lifecycle obtained 240. The results are given in **table: 5**

**Table: 5**

| Type of Battery | No of Life cycles |
|---|---|
| Monopolar Tubular battery(12V/75AH) | 240 |

(continued)

| Type of Battery | No of Life cycles |
|---|---|
| Unielectro grid lead acid battery(12V/75AH) | 445 |

**Example: 19**

48V-7AH uni-electrogrid battery is constructed using negative end grid plate and Poly ethylene saparator and stacking of unielectrogrid plate as shown in **example:2** and then covered with Poly ethylene separator. Further, it is repeated 22 more uni-electrogrid plates then mono-polar positive plate at the end of the battery. Thus, uni-elecrogrid battery 48V/7Ah constructed.

**Advantages of the present invention:**

The following are the technical advantages of the invention:

1. Life cycle improvement upto 150% over mono-polar battery.
2. Charging time reduced upto 50 to 80%.
3. Preparation of uni-electro grid Tubular battery consists of Tubular Positive Plate and negative flat plate with multiple current flow path as well as short path of current flow between Positive and Negative Plate and same plate act as positive plate of the one cell and another side act as negative plate of the another cell.
4. Higher Ampere hour (400 Ah) and Voltage battery (48V).

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

While specific language has been used to describe the present subject matter, any limitations arising on account thereto, are not intended. As would be apparent to a person in the art, various working modifications may be made to the method in order to implement the inventive concept as taught herein.

**Claims**

1. Uni-electro grid plate comprising:

    a) tubular unielectro grid plate comprising of positive tubular grid plate and negative flat grid plate; or flat unielectrogrid plate comprising of positive flat grid plate and negative flat grid plate;
    b) non-conductive substrate comprising positive tubular grid with positive active material on its first side and negative flat grid with negative active material on its second side; or positive flat grid with positive active material on its first side and negative flat grid with negative active material on its second side;
    c) at least single in one side of the grid or multiple interconnectors placed between the positive and negative grid; and
    d) sealant.

2. The uni-electro grid plate as claimed in claim 1, wherein the positive grid plate, the negative grid plate and the interconnectors comprises lead metal or its alloys and the alloys comprising calcium or antimony or tin or silver or selenium or mixture thereof; and wherein the alloy elements ranges from 0 to 3 weight% in the lead alloy.

3. The uni-electro grid plate as claimed in claim 1, wherein the positive active material (PAM) comprises Lead oxide, Dinel Fibre, water and sulphuric acid; wherein the negative active material (NAM) comprises lead oxide, Dinel Fiber, Carbon black or Carbon Nano tube or mixture thereof, Vanisperse (lignin), Barium sulphate, water and sulphuric acid; wherein the non-conductive substrate comprises of Acrylonitrile butadiene styrene or Poly propylene or Acrylic or High density Poly ethylene; and wherein the sealant comprises acid resistant epoxy resins.

4. The uni-electro grid plate as claimed in claim 1, wherein in the flat uni-electro grid plate, the distance between the two adjacent interconnectors is uniformly maintained on the length side and on the width side and preferably, the distance between the adjacent interconnectors is ranging from 0.005 m to 0.05 m; and number of interconnectors on the length side is selected in the ratio of length of the flat plate to distance between the two adjacent interconnectors; and number of interconnectors on the width side is selected in the ratio of width of the flat plate to distance between the two adjacent interconnectors.

5. The uni-electro grid plate as claimed in claim 1, wherein in the tubular uni-electro grid plate, the number of interconnectors between the positive tubular grid plate and the negative flat grid plate is equal to numbers of tubes present in the glandlets of the tubular positive grid plate; and the distance between the adjacent interconnectors is equal to the ratio of top or bottom length of the tubular grid plate to the number of tubes in the positive tubular glandlets; and wherein the distance between the two adjacent interconnectors is uniformly maintained in the top or bottom side of the positive tubular grid and negative flat grid.

6. The uni-electro grid plate as claimed in claim 2, wherein preferably the lead calcium positive grid (flat) comprises calcium 2 weight %; lead calcium negative grid comprises 2 weight % calcium; lead tin interconnectors comprises 2 weight % of Tin; and the non-conductive substrate is Acrylonitrile Butadiene Styrene sheet (ABS) or Poly propylene or Styrene acrylonitrile .

7. A process of preparation of flat plate or tubular uni-electrogrids, said process comprising:

i) preparing Lead calcium positive grid (flat) comprising 2 weight % calcium and the positive active material (PAM) using Lead oxide, Dinel Fibre, water and sulphuric acid; coating the positive grid with positive active material and curing the coated positive grid for at least 48 hours;
ii) tubular positive plate comprises of active material as Lead oxide;
iii) preparing Lead calcium negative grid comprising 2 weight % calcium and the negative active material (NAM) using lead oxide, Dinel Fiber, Carbon black, Vanisperse (lignin), Barium sulphate, water and sulphuric acid; coating the negative grid with negative active material and curing the coated negative grid for at least 48 hours;

a) wherein the flat uni-electrogrid comprises of connecting the flat positve grid and flat negative grids using multiple Lead-tin interconnectors around the circumference of the grid through the non-conductive substrate; wherein the distance between the two adjacent interconnectors is uniformly maintained on the length side and on the width side, preferably the distance between the adjacent interconnectors is ranging from 0.005 metre to 0.05 metre and the number of interconnectors on the length side is selected in the ratio of length of the flat plate to distance between the two adjacent interconnectors; and number of interconnectors on the width side is selected in the ratio of width of the flat plate to distance between the two adjacent interconnectors ; or
b) wherein the tubular uni-electro grid comprises of connecting the tubular positive grid and negative flat grid using multiple lead-tin interconnectors on top or bottom wherein the number of interconnectors between the positive tubular grid and negative flat grid is selected which is equal to numbers of tubes present in the glandlets of the tubular positive grid and the distance between the adjacent interconnectors is equal to the ratio of top or bottom length of the tubular grid to the number of tubes in the positive tubular glandlets and wherein distance between the two adjacent interconnectors is uniformly maintained on the top or bottom side of the positive tubular grid and negative flat grid;

iv) sealing the interconnectors and the non conductive substrate sheet using a sealant, the sealant preferably comprising acid resistant epoxy resins; wherein one side of the non-conductive substrate sheet comprises Positive grid and other side of the non-conductive substrate sheet comprises Negative grid; and
v) flowing the current through positive and negative plate through multiple interconnectors.

8. The process as claimed in claim 7, wherein the unielectrodegrid flat or tubular configuration provides both positive and negative plate in a single plate, the one side act as positive plate and another side act as a negative plate for another cell; preferably wherein Lead Antimony positive grid (flat) comprises Antimony (Sb) 1.75 weight %; and wherein the non conductive substrate is Acrylonitrile Butadiene Styrene sheet (ABS) or Poly propylene sheet (PP) or Styrene Acrylonitrile.

9. A process for preparing unielectrogrid battery, said process comprising the steps of:

i) using flat negative as first end grid plate and a separator between the positive and negative plates;

ii) stacking of unielectrogrid plates as obtained from claim 7 and covering with the separator; and

iii) repeating the step (ii) for multiple unielectrogrid plates and placing flat positive as second end grid plate for obtaining unielectrogrid battery.

10. The process as claimed in claim 9, wherein the separator comprises Adsorptive Glass Mat (AGM) or Poly ethylene (PE).

11. A process for preparing tubular Unielectrogrid battery, said process comprising:

i) preparing Lead calcium tubular positive grid comprising calcium 2 weight % and multiple tubes wherein each tube comprises positive active material;

ii) preparing Lead calcium negative grid comprising 2 weight% calcium and negative active material (NAM) prepared using lead oxide, Dinel Fiber, Carbon black, Vanisperse (lignin), Barium sulphate, water and sulphuric acid, wherein the negative flat grid is coated with negative active material and subjected for curing for at least 48 hours;

iii) connecting the positive grid and negative grids using multiple Lead interconnectors top and bottom of the grid through the non-conductive substrate and providing the interconnections between the top and bottom of the positive and negative grids; wherein one side of the non-conductive substrate sheet comprises positive grid and other side of the non-conductive substrate sheet comprises negative grid; wherein the tubular uni-electro grid comprises of connecting the tubular positive grid and negative flat grid using multiple lead-tin interconnectors on top or bottom wherein the number of interconnectors between the positive tubular grid and the negative flat grid is equal to the numbers of tubes present in the glandlets of the tubular positive grid; and the distance between the adjacent interconnectors selected is equal to the ratio of top or bottom length of the tubular grid to the number of tubes in the positive tubular glandlets and wherein distance between the two adjacent interconnectors is uniformly maintained on the top or bottom side of the positive tubular grid and negative flat grid;

iv) sealing the interconnectors and the non-conductive substrate sheet using a sealant, preferably comprising acid resistant epoxy resins; and

v) flowing current through positive and negative plate through unigrid multiple interconnectors; wherein a single plate act as a positive plate of the one cell and negative plate for the other cell.

12. The process as claimed in claim 11, wherein the non-conductive substrate comprises Acrylonitrile Butadiene Styrene sheet (ABS) or Poly propylene sheet (PP) or Styrene AcryloNitrile (SAN).

13. The process as claimed in claim 9 or 11, wherein the uni-electrogrid Lead acid battery is prepared using flooded lead acid battery type or Gel electrolyte or with Adsorptive Glass mat or Flooded adsorptive glass mat.

14. The process as claimed in claim 9 or 11, wherein the specific gravity of the electrolyte sulphuric acid used in the uni-electrogrid is in the range of 1.05 g/cc to 1.34 g/cc.

15. Flat or tubular unielectrogrid battery comprising the flat or tubular positive grid, flat negative grid, non conductive substrate, positive active material, negative active material, multiple interconnectors and sealant, wherein a single plate act as a positive plate of the one cell and negative plate for the other cell, obtained by the process as claimed in claim 9 or 11,

exhibiting upto 150% improvement in life cycle over mono-polar battery, upto 50 to 80% reduction in charging time, providing 12 Volts, 24 Volts, 48 Volts and 7 Ah, 25 Ah, 75 Ah, 250 Ah and 400 Ah battery using unielectrogrids by stacking arrangements; and decrease in the resistance of the battery;

$$\text{Resistance} = l/(\rho * \Sigma na)$$

n=1,2,3 ..... n in which n=is number of interconnectors,

1=length of the interconnectors, and

a is the cross sectional area of individual connectors.

**Figure: 1 (Prior Art)**

**Figure: 2 (Present invention)**

**Figure: 3 (Present Invention)**

Figure 4a: Varying Limiting Voltage

Figure 4b: Varying Limiting Current

**Figure: 4 ( Present Invention): (a) and (b)**

**Figure: 5 (Present Invention)**

a) Non conductive substrate; b) Non conductive surface; c) Interconnectors between negative and positive grid; d) Equal distance between the interconnectors; e) Sealing of interconnectors; f) Grid

**Figure: 6 (Present Invention)**

Europäisches
Patentamt

European
Patent Office

Office européen
des brevets

## EUROPEAN SEARCH REPORT

Application Number

EP 21 20 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/184311 A1 (TIANNENG BATTERY GROUP CO LTD [CN]) 3 October 2019 (2019-10-03) | 1,2,4-8, 11,12 | INV. H01M4/16 |
| Y | * page 2; figures 1-3,5, 7-9 *<br>* page 3, lines 5-7, 28-32 *<br>* page 4, lines 1-18, 28-31 *<br>----- | 3 | H01M4/56<br>H01M4/62<br>H01M4/68<br>H01M4/73 |
| X | CN 102 005 566 A (ZHENMING XIA) 6 April 2011 (2011-04-06) | 1,4,5, 7-15 | H01M4/76<br>H01M4/82 |
| Y | * paragraphs [0020], [0022] – [0023], [0025], [0073]; figures 1-4, 16-18 *<br>----- | 3 | H01M10/14<br>H01M10/18<br>H01M50/529 |
| Y | EP 3 404 747 A1 (INDIAN OIL CORP LTD [IN]) 21 November 2018 (2018-11-21)<br>* paragraphs [0081], [0085]; example 5 *<br>----- | 3 | |
| A | CN 106 025 387 A (ZHENJIANG AOMEI ELECTROMECHANICAL EQUIPMENT CO LTD) 12 October 2016 (2016-10-12)<br>* paragraphs [0007] – [0008] *<br>----- | 1-15 | |

TECHNICAL FIELDS
SEARCHED     (IPC)

H01M

The present search report has been drawn up for all claims

| Place of search | Date of completion of the search | Examiner |
|---|---|---|
| Munich | 17 March 2022 | Monti, Adriano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

1

## ANNEX TO THE EUROPEAN SEARCH REPORT
## ON EUROPEAN PATENT APPLICATION NO.

EP 21 20 5125

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2022

| Patent document cited in search report | | Publication date | Patent family member(s) | | Publication date |
|---|---|---|---|---|---|
| WO 2019184311 | A1 | 03-10-2019 | CN<br>WO | 108550860 A<br>2019184311 A1 | 18-09-2018<br>03-10-2019 |
| CN 102005566 | A | 06-04-2011 | NONE | | |
| EP 3404747 | A1 | 21-11-2018 | EP<br>US | 3404747 A1<br>2018337397 A1 | 21-11-2018<br>22-11-2018 |
| CN 106025387 | A | 12-10-2016 | NONE | | |

EPO FORM P0459

For more details about this annex : see Official Journal of the European Patent Office, No. 12/82

**EP 3 993 101 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4275130 A
- US 5348817 A
- US 5126218 A
- US 6077623 A
- US 8357469 B
- US 9570737 B
- JP 4720384 B
- US 5296320 A